# EUROPÄISCHE PATENTSCHRIFT

(11) **EP 1 618 312 B1**
(45) Veröffentlichungstag und Bekanntmachung des Hinweises auf die Patenterteilung: **11.10.2006**
(21) Anmeldenummer: 04726439.5
(22) Anmeldetag: 08.04.2004
(51) Int. Cl.: F16D 41/20

(54) **BEIDSEITIG WIRKENDER ANTRIEB**
BILATERAL DRIVE
ENTRAINEMENT A ACTION BILATERALE

(30) Priorität: 22.04.2003 DE 10318894
(43) Veröffentlichungstag der Anmeldung: 25.01.2006
(73) Patentinhaber: Brose Fahrzeugteile GmbH & Co. KG, Coburg, 96450 Coburg (DE)
(72) Erfinder: SCHECK, Georg, 96479 Weitramsdorf (DE); KRÜGER, Frieder, 96271 Grub (DE); KLOPP, Marcus, 96450 Coburg (DE); ANGERMÜLLER, Stephanie, 96279 Weidhausen (DE); WEISS, Matthias, 96472 Rödental (DE)
(74) Vertreter: Ninnemann, Detlef
(86) Internationale Anmeldenummer: PCT/DE2004/000797
(87) Internationale Veröffentlichungsnummer: WO 2004/094854

(56) Entgegenhaltungen:
- DE-A- 3 028 012
- DE-A- 4 309 334
- DE-A- 19 855 285
- DE-A- 19 907 483

## Beschreibung

Die Erfindung betrifft einen beidseitig wirkenden Antrieb zur Drehung eines mit einer Verstellvorrichtung verbundenen Antriebsrades gemäß dem Oberbegriff des Patentanspruchs 1.,

Aus der DE 198 55 285 A1 ist ein beidseitig wirkender, manueller Antrieb zur Erzeugung einer Drehbewegung bekannt, die ausgehend von einer Nullpunktlage eines um eine Antriebsachse schwenkbaren Antriebshebels wahlweise in die eine oder andere Drehrichtung erfolgt. Bei Drehung des Antriebshebels aus der Nullpunktlage legen sich Anlageflächen von kreisabschnittsförmigen Kopplungselementen kraftschlüssig an die ihnen gegenüberstehenden teilkreisförmigen Flächen einer zylinderförmigen Antriebsfläche eines Abtriebselements an und führen das Abtriebselement in Umfangsrichtung mit, während bei einer Rückführung des Antriebshebels in die Nullpunktlage die kraftschlüssige Anlage der Kopplungselemente an der zylinderförmigen Antriebsfläche aufgehoben wird, so dass das Abtriebselement nicht mitgenommen wird.

Eine aus der DE 199 07 483 C2 bekannte beidseitig wirkende Verstellvorrichtung zur Erzeugung einer Drehbewegung weist ein Gehäuse auf, in dem ein Antriebselement, ein durch Betätigen des Antriebselements winkelverstellbares Abtriebselement und eine Schlingfeder mit mehreren Windungen angeordnet sind, die sich an der Innenwand des Gehäuses abstützen und ein abtriebsseitig eingeleitetes Drehmoment blockieren, während sie bei einem antriebsseitig eingeleiteten Drehmoment die Übertragung des Drehmoments vom Antriebselement auf das Abtriebselement freigeben. Die abgewinkelten Enden der Schlingfeder sind mit einem zwischen dem Antriebselement und dem Abtriebselement angeordneten Übertragungselement verbunden.

Durch dynamische Umkehr kann aus dieser Drehmomentsperre ein beidseitig wirkender Antrieb hergestellt werden, bei dem das Abtriebselement mit einem Antriebshebel verbunden wird und das zylinderförmige Gehäuse durch ein zylinderförmiges Antriebsrad ersetzt wird, so dass bei einer Schwenkbewegung des Antriebshebels die Schlingfeder über das Übertragungselement vom Antriebshebel aufgeweitet wird und die Schwenkbewegung des Antriebshebels auf die zylinderförmige Innenfläche des Antriebsrades überträgt.

Bei den bekannten beidseitig wirkenden Antrieben treten in Folge einer Linienanlage der als kreisabschnittsförmige Kopplungselemente ausgebildeten Übertragungselemente an der Antriebsfläche hohe Flächenpressungen auf. Die Verwendung einer Schlingfeder erfordert zur hinreichend kraftschlüssigen Anlage der Schlingfeder an der zylinderförmigen Innenfläche des Abtriebselements mehrere Windungen. Trotzdem besteht in Folge der aufzubringenden Kräfte bei der Drehmomentübertragung die Gefahr, dass bei Überlast die abgewinkelten Schlingfederenden umgebogen werden, so dass der beidseitig wirkende Antrieb funktionsunfähig wird.

Das Dokument DE-A-43 09 334 zeigt einen beidseitig wirkenden Antrieb zur Drehung einer Antriebswelle in die eine oder andere Antriebsrichtung mit einem um eine Antriebsachse ausgehend von einer Nullpunktlage in die eine oder andere Richtung schwenkbaren Antriebshebel, der mit Spreiznocken verbunden ist, die um eine von der Antriebsachse beabstandete virtuelle Achse kippbar sind, so dass ein am Umfang der Antriebswelle anliegendes Federelement zur Mitführung der Antriebswelle zusammenziehbar ist.

Aufgabe der vorliegenden Erfindung ist es, einen beidseitig wirkenden Antrieb zur Drehung eines mit einer Verstellvorrichtung verbundenen Antriebsrades der eingangs genannten Gattung anzugeben, der eine Drehmomentübertragung vom Antriebshebel zum Antriebsrad mit geringer Flächenpressung der Kraftübertragungselemente ermöglicht, bei hoher Lebensdauer sehr einfach und kompakt aufgebaut sowie kostengünstig herstellbar ist.

Diese Aufgabe wird erfindungsgemäß durch die Merkmale des Anspruchs 1 gelöst.

Die erfindungsgemäße Lösung ermöglicht eine Drehmomentübertragung vom Antriebshebel zum Antriebsrad mit geringer Flächenpressung der Kraftübertragungselemente und ist bei hoher Lebensdauer und kompakter, raumsparender Konstruktion sehr einfach aufgebaut und kostengünstig herstellbar.

Durch die Aufweitung des Federelements über eine große Anlagefläche an der zylinderförmigen Antriebsfläche des Antriebsrades sowie durch die um eine von der Antriebsachse beabstandete Achse kippbaren Spreiznocken des Kopplungselements erfolgt der Kraftschluss zur Übertragung eines Drehmoments vom Antriebshebel zum Antriebsrad auf einer großen Anlagefläche und daher mit geringer Flächenpressung.

Da bei der Kraftübertragung vom Antriebshebel zum Antriebsrad nur wenige Bauteile erforderlich sind, kann der beidseitig wirkende Antrieb zudem einfach und kostengünstig hergestellt werden.

Vorzugsweise sind die Spreiznocken in unterschiedlichen radialen Abständen von der Antriebsachse am Antriebshebel angeordnet, so dass die Spreiznocken beim Schwenken des Antriebshebels um die Antriebsachse eine Kippbewegung vollführen, wodurch die mit dem Federelement verbundenen Betätigungshebel gespreizt werden und das Federelement zur Anlage an der zylinderförmigen Antriebsfläche des Antriebsrades aufgeweitet wird.

Zur spielfreien Anlage der Spreiznocken an den Spreizflächen der Betätigungshebel ist mindestens ein Spreiznocken vorgespannt, keilförmig ausgebildet und zwischen zwei gegenläufigen Keilflächen der Spreizflächen der Betätigungshebel radial verschiebbar angeordnet sowie selbsthemmend gegenüber dem anderen Spreiznocken abgestützt.

Vorzugsweise ist auch der andere Spreiznocken keilförmig mit entgegengerichteter Keilform ausgebildet und zwischen gegenläufige Keilflächen der Betätigungshebel eingespannt.

Zur Sicherung eines leichten Nachstellens der Spreiznocken zur spielfreien Anlage an den Spreizflächen der Betätigungshebel einerseits und zur Sicherung der Selbsthemmung zwischen den radial gegeneinander verspannten Spreiznocken bei kraftfreier Anlage der Keilflächen der Betätigungshebel an den Berührungsflächen der keilförmigen Spreiznocken andererseits weisen die Berührungsflächen und die Keilflächen einen geringeren Reibungskoeffizienten auf als die gegenseitige Abstützung der keilförmigen Spreiznocken.

Zur Steigerung der Selbsthemmung kann die gegenseitige Abstützung der keilförmigen Spreiznocken keilförmig mit einem Keilwinkel ausgebildet sein, der kleiner ist als der zwischen den Berührungsflächen der keilförmigen Spreiznocken und den Keilflächen der Betätigungshebel eingeschlossene Keilwinkel, insbesondere halb so groß ausgebildet ist.

Die erfindungsgemäße Lösung lässt verschiedene Ausführungsformen zu, die demselben Lösungsprinzip dienen. Eine erste Ausführungsform ist dadurch gekennzeichnet, dass das Federelement aus einem Federband besteht, dessen Enden parallel zueinander abgewinkelt und in Aufnahmen der Betätigungshebel eingesetzt sind.

Die Betätigungshebel können scheibenförmig ausgebildet sein und eine periphere Fläche aufweisen, die zumindest teilweise der zylinderförmigen Innenwand des Antriebsrades angepasst ist.

In einer alternativen Ausführungsform können die Betätigungshebel aus einem einteiligen, federelastischen Spreizhebel bestehen, der die Spreiznocken und die Antriebsachse einfaßt und auf der den Spreiznocken in Bezug auf die Antriebsachse gegenüberliegenden Seite einen Zugkräfte aufnehmenden elastischen Steg aufweist.

In einer weiteren Aternative können der Spreizhebel und eine an die Antriebsfläche des Antriebsrades angepasste Umfangsfläche zu einem Formteil zusammengefaßt werden, das aus einem gestanzten Stahlteil, einem Kunststoffteil oder einem Sinterteil besteht und ohne Vorspannung in den Innenraum des Antriebsrades eingesetzt wird.

Zwischen den Betätigungshebeln oder dem Spreizhebel können Rückstellfedern so angeordnet werden, dass die Betätigungshebel oder der Spreizhebel die Spreiznocken nach einer Schwenkbewegung des Antriebshebels in eine der Nullpunktlage des Antriebshebels entsprechende Ausgangslage zurückbewegen.

Zum Rückstellen des Antriebshebel nach einer Schwenkbewegung in die Nullpunktlage ist zwischen dem Antriebshebel und einem ortsfesten Anschlag am Gehäuse des beidseitig wirkenden Antriebs eine Hebel-Rückstellfeder angeordnet ist.

Bei den vorstehend genannten Ausführungsformen weist der Antriebshebel eine als Langloch ausgebildete Anlenkung an der Antriebsachse auf, um das benötigte Bewegungsspiel bei der Spreizung der Betätigungshebel bzw. der Querstrebe sicherzustellen.

In einer weiteren Variante der erfindungsgemäßen Lösung, die auf beide vorstehende Ausführungsformen anwendbar ist, sind die Spreiznocken in unterschiedlichen radialen Abständen von der Antriebsachse an einem schwenkbar am Antriebshebel abgestützten Verstärkungshebel angeordnet, so dass das erforderliche Bewegungsspiel durch den Verstärkungshebel bereitgestellt wird, während der Antriebshebel spielfrei an der Antriebsachse angelenkt werden kann und demzufolge optimal zentriert ist.

Die Anlenkung des Verstärkungshebels am Antriebshebel kann radial fluchtend zu den Spreiznocken angeordnet und entweder auf derselben Seite in Bezug auf die Antriebsachse wie die Spreiznocken oder auf der den Spreiznocken gegenüber liegenden Seite des Verstärkungshebels in Bezug auf die Antriebsachse vorgesehen werden.

Die Erfindung wird nachfolgend unter Bezugnahme auf die Figuren der Zeichnung an mehreren Ausführungsbeispielen im Einzelnen erläutert. Es zeigen:
- Fig. 1: eine Schnittansicht eines beidseitig wirkenden Antriebs mit einem Federband und Betätigungsscheiben;
- Fig. 2: eine Schnittansicht eines beidseitig wirkenden Antriebs mit einem Federband, Betätigungshebeln und keilförmigen Spreiznocken;
- Fig. 3: eine Schnittansicht eines beidseitig wirkenden Antriebs mit einem elastischen Formteil und einem Federband;
- Fig. 4: eine Schnittansicht eines beidseitig wirkenden Antriebs mit einem elastischen Formteil mit federnder Umfangsfläche und
- Fig. 5 und 6: eine Schnittansicht eines beidseitig wirkenden Antriebs mit einem Formteil mit federnder Umfangsfläche und einem Verstärkungshebel.

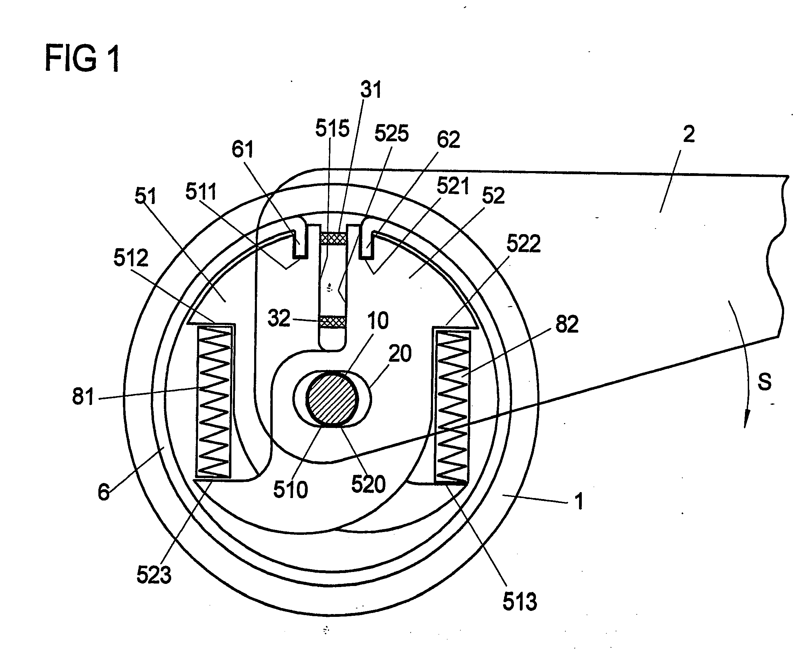

Der in Fig. 1 dargestellte beidseitig wirkende Antrieb weist einen um eine Antriebsachse 10 schwenkbaren Antriebshebel 2 auf, der über ein Langloch 20 an der Antriebsachse 10 und damit mit radialem Spiel angelenkt ist. Eine Schwenkbewegung des Antriebshebels 2 in Richtung des an den Antriebshebel 2 angetragenen Pfeiles S oder in Gegenrichtung führt zu einer Drehbewegung eines Antriebsrades 1, das eine zylinderförmige Antriebsfläche aufweist, innerhalb der eine Übertragungseinrichtung angeordnet ist, die das durch die Schwenkbewegung des Antriebshebels 2 erzeugte Drehmoment auf das Antriebsrad 1 überträgt und dabei das Antriebsrad 1 in der Schwenkrichtung des Antriebshebels in Umfangsrichtung mitführt, wenn der Antriebshebel 2 von einer Nullpunktlage wegbewegt wird, während das Antriebsrad 1 bei einer Rückführung des Antriebshebels 2 in die Nullpunktlage nicht mitgeführt wird.

Die Schnittansicht des beidseitig wirkenden Antriebs gemäß Fig. 1 zeigt lediglich die für die vorliegende Erfindung bedeutsamen Elemente des beidseitig wirkenden Antriebs. Gegebenenfalls sind weitere Elemente wie Distanzhülsen oder Abstandsscheiben vorgesehen, insbesondere ist ein in Fig. 1 nicht dargestelltes Bremsgehäuse vorgesehen, in dem eine Bremsvorrichtung angeordnet ist, die derart mit dem Antriebsrad 1 in Verbindung steht, dass eine abtriebsseitige Drehmomentübertragung gesperrt wird, während bei einer antriebsseitigen Drehmomentübertragung die Sperrwirkung aufgehoben ist. Die Bremsvorrichtung verhindert somit, dass beim Auftreten äußerer Kräfte eine Verstellung des beidseitig wirkenden Antriebs erfolgt. Insbesondere stellt sie sicher, dass im Falle des Auftretens von Crashkräften eine Drehbewegung des Antriebsrades 1 verhindert wird.

Die Übertragungseinrichtung enthält ein Federband 6 sowie zwei auf der Antriebsachse 10 gelagerte Betätigungsscheiben 51, 52 mit Federbandaufnahmen 511, 521, in die parallel zueinander abgewinkelte Federenden 61, 62 des Federbandes 6 eingesetzt sind. Weiterhin enthält die Übertragungseinrichtung ein Kopplungselement in Form von zwei zwischen den Betätigungsscheiben 51, 52 mit geringem Spiel gelagerten Spreiznocken 31, 32, die mit dem Antriebshebel 2 verbunden und insbesondere Teil des Antriebshebels 2 sind, so dass sie bei einer Schwenkbewegung des Antriebshebels 2 um eine virtuelle Achse kippen, die von der Antriebsachse 10 beabstandet ist. Die Spreiznocken 31, 32 liegen an Spreizflächen 515, 525 der Betätigungsscheiben 51, 52 an, die sie bei einer Schwenkbewegung des Antriebshebels 2 und wegen der daraus resultierenden Kippbewegung um die außerhalb der Antriebsachse 10 liegende virtuelle Achse auseinanderdrücken, so dass über die Federbandaufnahmen 511, 521 das Federband 6 aufgeweitet wird und damit die Schwenkbewegung des Antriebshebels 2 durch Mitnahme des Antriebsrades 1 in eine Drehung des Antriebsrades 1 in die Schwenkrichtung des Antriebshebels 2 umgesetzt wird.

Wenn die Reibung zwischen dem Federband 6 und dem Antriebsrad 1 vergleichsweise gering ist, kann zur Erzeugung hinreichend großer Verspannkräfte der Abstand der Nocken 31, 32 untereinander verringert werden. Dadurch entstehen relativ große Druckkräfte der Nocken 31, 32 auf die Spreizflächen 515, 525 der Betätigungsscheiben 51, 52, was eine entsprechend stabile Dimensionierung bedingt. Auch das Winkelspiel am Antriebshebel 2 wird bei kleinen Abständen der Nocken 31, 32 ungünstig beeinflusst. Deshalb wird in Abhängigkeit von den jeweils vorliegenden Reibungsverhältnissen zwischen dem Federband 6 und dem Antriebsrad 1 ein möglichst großer. Abstand zwischen den Nocken 31, 32 gewählt und der äußere Nocken 31 radial soweit wie möglich außen angeordnet.

Zur Rückstellung der Übertragungseinrichtung und damit des Antriebshebels 2 in die Nullpunktlage dienen zwei Rückstellfedern 81, 82, die an Anlagen 512, 513 bzw. 522, 523 der Betätigungsscheiben 51, 52 und an gehäusefesten Anlagen abgestützt sind. Die von den Rückstellfedern 81, 82 aufzubringende Rückstellkraft kann gering gehalten werden. Bei einer durch die Spreiznocken 31, 32 verursachten Relativbewegung der Betätigungsscheiben 51, 52 zum Aufweiten des Federbandes 6 werden die Rückstellfedern 81, 82 gespannt und dementsprechend bei der Rückführung des Antriebshebels 2 in die Nullpunktlage entspannt bis der Antriebshebel 2 die Nullpunktlage erreicht hat.

Eine zusätzliche Vorspannung des Federbandes 6 ist in der in Fig. 1 dargestellten Anordnung nicht erforderlich, da die Rückstellfedern 81, 82 die vom Federband 6 benötigte Vorspannung bei Betätigung des Antriebshebels 2 erbringen und das Federmoment eine Anlagemoment der Nocken 31, 32 bewirkt.

Betätigt man den Antriebshebel 2 in Richtung des Pfeiles S, so wird auf die Spreiznocken 31, 32 ein Moment ausgeübt, welches die Betätigungsscheiben 51, 52 und damit das Federband 6 auseinanderdrückt und über die Reibung das Antriebsrad 1 mitnimmt. Das Langloch 20 im Antriebshebel 2 sorgt für eine freie Bewegung an dieser Stelle.

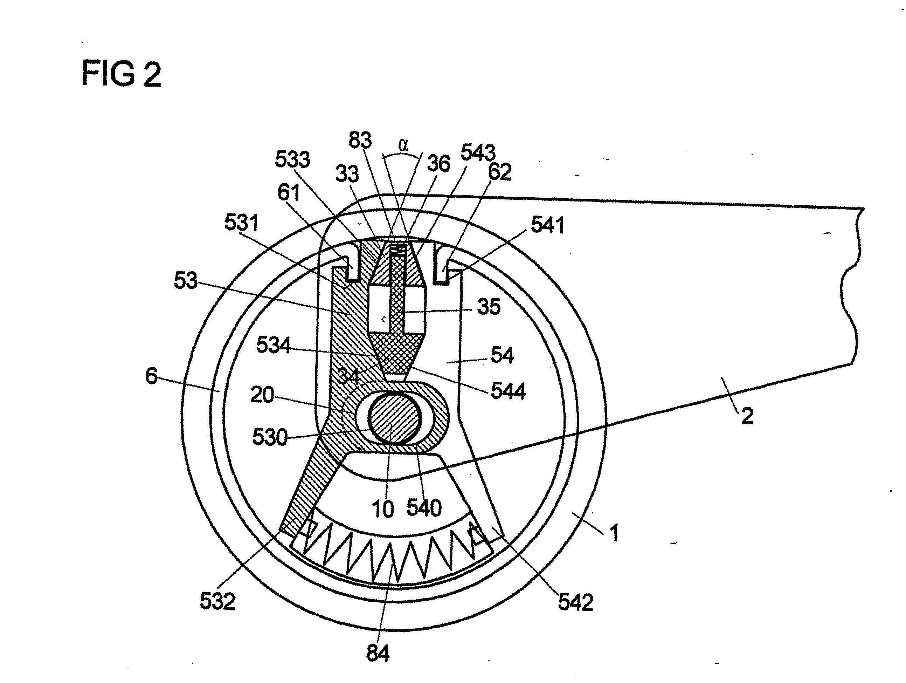

Fig. 2 zeigt in einer Schnittansicht eines beidseitig wirkenden Antriebs eine modifizierte Übertragungseinrichtung mit einer spielfreien Verbindung von Spreiznocken 33, 34 mit Betätigungshebeln 53, 54 zum Aufweiten eines Federbandes 6 bei der Drehmomentübertragung vom Antriebshebel 2 auf das Antriebsrad 1.

Die Spreiznocken 33, 34 sind in dieser Ausführungsform keilförmig ausgebildet und liegen an Keilflächen 533, 543 bzw. 534, 544 der Spreizflächen der spielfrei mittels Bohrungen 530, 540 an der Antriebsachse 10 abgestützten Betätigungshebel 53, 54 an. Der in geringerem Abstand von der Antriebsachse 10 angeordnete Spreiznocken 34 weist einen Steg 35 auf, der mit seinem keilförmigen Ende in eine keilförmige Ausnehmung 36 des in größerem Abstand von der Antriebsachse 10 angeordneten keilförmigen Spreiznockens 33 eingesteckt und mit einer Feder 83 gegenüber dem Spreiznocken 33 abgestützt ist. Der in geringerem Abstand von der Antriebsachse 10 angeordnete Spreiznocken 34 und der Steg 35 sind Teil des Antriebshebels 2, der über ein Langloch 20 an der Antriebsachse 10 abgestützt ist.

Durch die Reibungsverhältnisse zwischen den Berührungsflächen der keilförmigen Spreiznocken 33, 34 und den gegenläufigen Keilflächen 533, 543 bzw. 534, 544 der Spreizflächen der Betätigungshebel 53, 54 einerseits und den aneinanderliegenden Keilflächen der Ausnehmung 36 des äußeren Spreiznockens 33 sowie des Steges 35 und durch entsprechende Keilwinkel wird sichergestellt, dass die Spreiznocken 33, 34 durch die Druckfeder 83 bei Betätigung des Antriebshebels 2 mit Selbsthemmung nachgestellt werden und dementsprechend ein durch Bauteiltoleranzen und Verschleiß bedingtes Spiel herausnehmen, während bei der Rückstellung durch die Rückstellfeder 84 die Keilflächen 533, 543 der Betätigungshebel 53, 54 gegen die glatten Keilflächen des Spreiznockens 33 drücken und dieser bedingt durch den Keilwinkel α radial ausweichen kann, wodurch die Schlingfeder 6 von der zylindrischen Innenwand des Antriebsrades 1 abheben kann und dadurch die Rückstellung nicht behindert wird. Somit wird die bei der Betätigung herrschende Selbsthemmung bei der Rückstellung des Antriebshebels 2 aufgehoben.

Zu diesem Zweck weisen die Flächen in der Ausnehmung 36 des äußeren Spreiznockens 33 sowie die entsprechende Berührungsfläche des Steges 35 raue Oberflächen sowie den halben Keilwinkel α/2 gegenüber dem Keilwinkel α der Keilflächen 533, 543 bzw. 534, 544 bzw. der Berührungsflächen der Spreiznocken 33, 34 auf, die mit glatter Oberfläche aneinander liegen und dementsprechend ohne Selbsthemmung aneinander gleiten können.

Das Federband 6 ist mit seinen parallel abgewinkelten Enden 61, 62 in Federbandaufnahmen 531, 541 der Betätigungshebel 53, 54 eingesteckt, die auf der der Antriebsachse 10 gegenüberliegenden Seite Schenkel 532, 542 aufweisen, zwischen denen eine Rückstellfeder 84 angeordnet ist, die zusätzlich an gehäusefesten Anlagen anliegt, so dass bei einer Schwenkbewegung des Antriebshebels 2 und der daraus resultierenden Relativbewegung der Betätigungshebel 53, 54 die Rückstellfeder 84 gespannt wird.

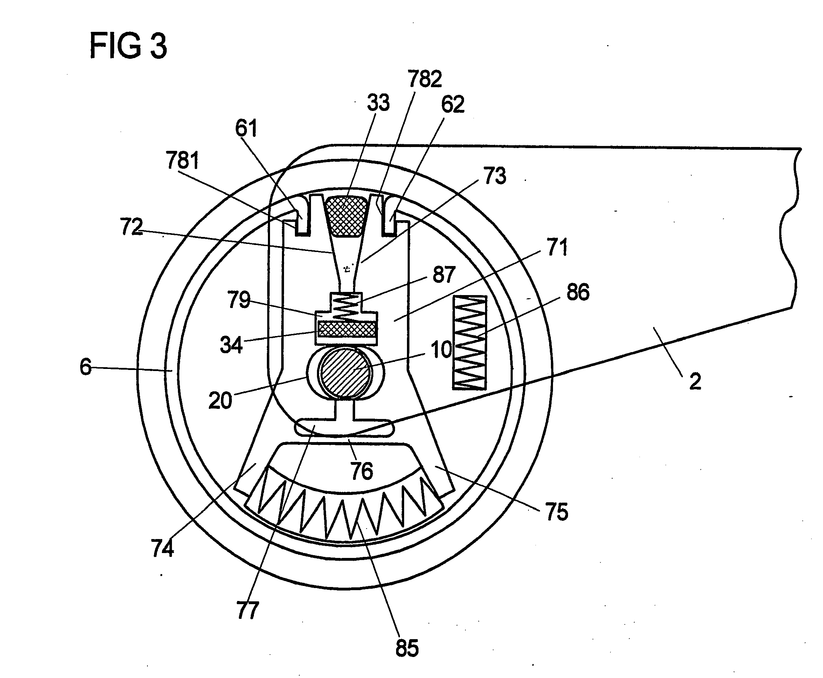

Die in Fig. 3 dargestellte Schnittansicht eines beidseitig wirkenden Antriebs weist anstelle zweier spielfrei an der Antriebsachse 10 gelagerter Betätigungshebel einen einteiligen, federelastischen Spreizhebel 71 mit keilförmigen Spreizflächen 72, 73 auf, zwischen denen ein mit dem Antriebshebel 2 verbundener keilförmiger Spreiznocken 33 angeordnet ist. In eine Ausnehmung 79 des Spreizhebels 71 ist ein zweiter mit dem Antriebshebel 2 verbundener Spreiznocken 34 eingesetzt, der zur Nachstellung des ersten, keilförmigen Spreiznockens 33 über eine Feder 87 abgestützt ist.

Die Drehlagerung der Betätigungsscheiben bzw. der Betätigungshebel in den Ausführungsformen eines beidseitig wirkenden Antriebs gemäß den Fig. 1 und 2 wird in dieser Ausführungsform durch eine elastische Verbindung in Form eines elastischen Steges 76 ersetzt, der durch eine Aussparung 77 des Spreizhebels 71 gebildet wird. Der Spreizhebel 71 besteht vorzugsweise aus einem Sinterteil, einem Kunststoff-Formteil oder einem gestanzten Stahlteil und ist spielfrei an der Antriebsachse 10 gelagert.

Als Übertragungseinrichtung ist ebenfalls ein Federband 6 vorgesehen, dessen parallel zueinander abgewinkelte Federenden 61, 62 in Federbandaufnahmen 781, 782 des Spreizhebels 71 eingesetzt sind. Bei einer Schwenkbewegung des Antriebshebels 2 und der daraus resultierenden Kippbewegung der Spreiznocken 33, 34 um eine außerhalb der Antriebsachse 10 liegende virtuelle Achse werden die Spreizflächen 72, 73 des Spreizhebels 71 auseinandergedrückt, das Federband 6 aufgeweitet und damit die Schwenkbewegung des Antriebshebels 2 durch Mitnahme des Antriebsrades 1 in eine Drehung des Antriebsrades 1 umgesetzt.

Zur Vorspannung des Spreizhebels 71 ist zwischen zwei Schenkeln 74, 75 Spreizhebels 71 eine erste Rückstellfeder 85 angeordnet, die die Schenkel 74, 75 auseinanderdrückt und dementsprechend die Spreizflächen 72, 73 an den ersten Spreiznocken 33 anlegt. Eine am Antriebshebel 2 und an einem orts- oder gehäusefesten Anschlag anliegende zweite Rückstellfeder 86 sorgt dafür, dass der Antriebshebel 2 nach einer Schwenkbewegung wieder in die Nullpunktlage zurückgestellt wird.

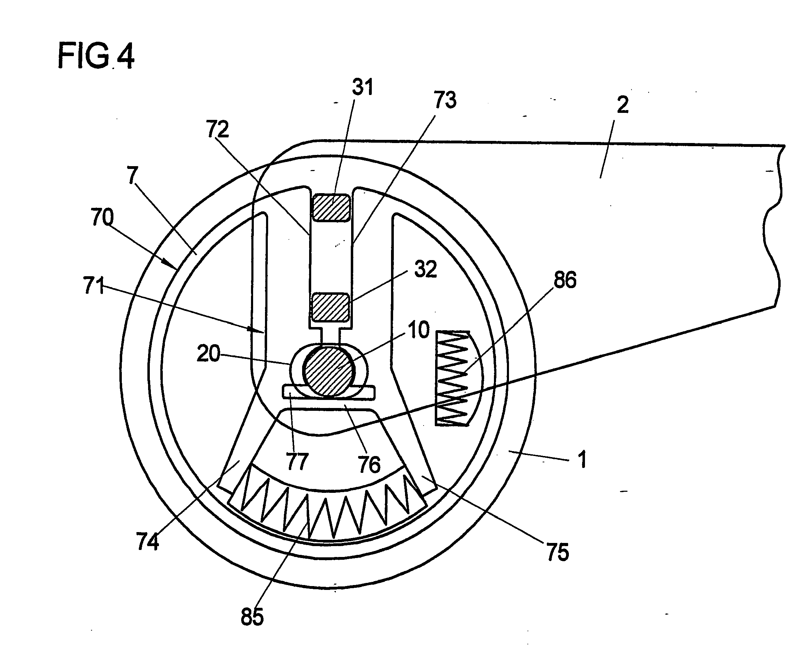

Die in Fig. 4 dargestellte Schnittansicht eines beidseitig wirkenden Antriebs enthält anstelle eines in Federbandaufnahmen des Spreizhebels 71 eingesetzten Federbandes eine der zylinderförmigen Innenwand des Antriebsrades 1 angepasste Umfangsfläche 70, die zusammen mit dem Spreizhebel 71 ein Formteil 7 bildet, das als Sinterteil, als Kunststoff-Formteil oder als gestanztes Stahlteil ausgebildet ist. Das Formteil kann ohne Vorspannung in die zylinderförmige Antriebsfläche des Antriebsrades 1 eingesetzt wer den, ist kostengünstig herstellbar, bereitet keine Toleranzprobleme und ist mechanisch sehr fest und dementsprechend dauerhaltbar.

Auch in dieser Ausführung ist der Spreizhebel 71 an der Antriebsachse 10 abgestützt und enthält voneinander beabstandete Spreizflächen 72, 73, zwischen denen die mit dem Antriebshebel 2 verbundenen Spreiznocken 31, 32 angeordnet sind. Die Drehlagerung der Betätigungsscheiben 51, 52 bzw. Betätigungshebel 53, 54 in den Ausführungsformen eines beidseitig wirkenden Antriebs gemäß den Fig. 1 und 2 wird in dieser Ausführungsform durch eine elastische Verbindung in Form eines elastischen Steges 76 ersetzt.

Zur Vorspannung des Formteils 7 ist zwischen zwei Schenkeln 74, 75 des Spreizhebels 71 eine erste Rückstellfeder 85 angeordnet, die die Schenkel 74, 75 auseinander drückt und dementsprechend die Spreizflächen 72, 73 an die Spreiznocken 31, 32 anlegt und die Umfangsfläche 70 des Formteils 7 von der zylinderförmigen Innenwand des Antriebsrades 1 abhebt. Wird der Antriebshebel 2 ausgehend von der in Fig. 4 dargestellten Nullpunktlage in die eine oder andere Richtung verschwenkt, so wird ein Kippmoment auf die Spreiznocken 31, 32 ausgeübt, das die Spreizflächen 72, 73 auseinander drückt und damit die Umfangsfläche 70 des Formteils 7 an die zylinderförmige Innenfläche des Antriebsrades 1 andrückt, so dass bei der Schwenkbewegung des Antriebshebels 2 das Antriebsrad 1 mitgenommen und in der Schwenkrichtung des Antriebshebels 2 gedreht wird. Dabei sorgt das Langloch 20, mit dem der Antriebshebel 2 an der Antriebsachse 10 abgestützt ist, für eine freie Bewegung des Antriebshebels 2.

Eine am Antriebshebel 2 und an einem orts- oder gehäusefesten Anschlag anliegende zweite Rückstellfeder 86 sorgt dafür, dass der Antriebshebel 2 nach einer Schwenkbewegung wieder in die Nullpunktlage zurückgestellt wird.

Für die Funktion des in Fig. 4 dargestellten Ausführungsbeispieles ist es nicht erforderlich, dass die Spreiznocken 31, 32 auf derselben Seite in Bezug auf die Antriebsachse 10 angeordnet sind. Stattdessen kann beispielsweise der Spreiznocken 32 auch zwischen der Antriebsachse 10 und der Ausnehmung 77 in eine entsprechende Öffnung des Quersteges 71 eingreifen, so dass ein größerer Hebelarm für die Antriebsnocken 31, 32 geschaffen wird.

In den vorstehend beschriebenen und in den Fig. 1 bis 4 dargestellten Ausführungsbeispiele ist der Antriebshebel 2 zur Bereitstellung des notwendigen Spiels bei der Kippbewegung der Spreiznocken 31, 32 bzw. 33, 34 über ein Langloch 20 an der Antriebsachse 10 abgestützt. Das Langloch 20 führt jedoch wegen der fehlenden Zentrierung des Antriebshebels 2 zu einem Bewegungsspiel des Antriebshebels 2.

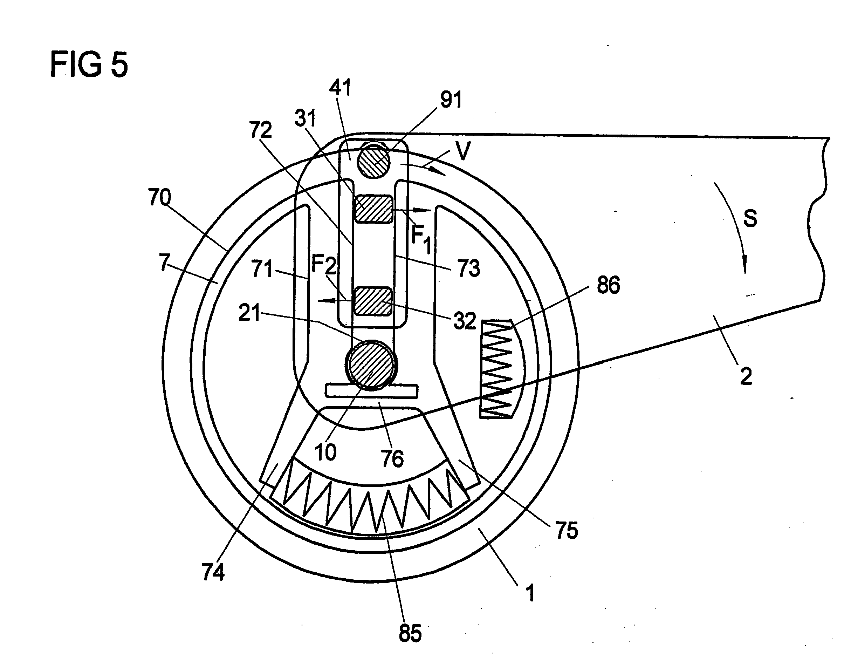

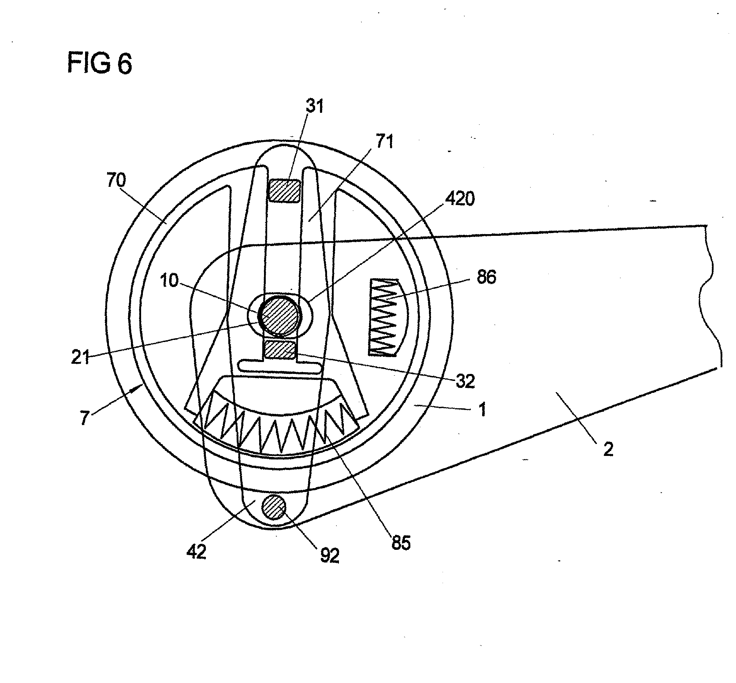

Dagegen ist bei den in den Fig. 5 und 6 dargestellten und nachfolgend beschriebenen Ausführungsbeispielen eines beidseitig wirkenden Antriebs der Antriebshebel 2 spielfrei und damit ohne Bewegungsspiel an der Antriebsachse 10 gelagert.

Im Unterschied zu der Ausführungsformen gemäß Fig. 4 sind die Spreiznocken 31, 32 nicht unmittelbar mit dem Antriebshebel 2 verbunden bzw. Teile des Antriebshebels 2, sondem auf einem Verstärkungshebel 41 angeordnet, der über einen Bolzen 91 schwenkbar am Antriebshebel 2 angelenkt ist. Der Antriebshebel 2 ist mittels einer der Antriebsachse 10 angepassten Bohrung 21 exakt auf der Antriebsachse 10 gelagert. Für eine exakte Zentrierung des Antriebshebels 2 sorgt eine zusätzliche Rückstellfeder 86 zwischen dem Antriebshebel 2 und einer orts- oder gehäusefesten Anlage.

Bei einer Schwenkbewegung des Antriebshebels 2 in Richtung des Pfeiles S wird der Verstärkungshebel 41 in Richtung des Pfeiles V mitgeführt, wodurch die Spreiznocken 31, 32 in Richtung der Pfeile F1 und F2 bewegt werden, so dass die Spreizflächen 72, 73 auseinandergedrückt und damit die Umfangsfläche 70 des Formteils 7 an die zylinderförmige Antriebsfläche des Antriebsrades 1 zur Mitführung des Antriebsrades 1 in Schwenkrichtung S des Antriebshebels 2 angedrückt wird.

Analog zu der in Fig. 4 dargestellten Ausführungsform eines beidseitig wirkenden Antriebs ist zwischen den Schenkeln 74, 75 des Spreizhebels 71 des Formteils 7 eine erste Rückstellfeder 85 zum Rückstellen des Spreizhebels 71 in dessen der Nullpunktlage der Antriebshebels 2 entsprechenden Ausgangslage angeordnet.

Eine am Antriebshebel 2 und an einem orts- oder gehäusefesten Anschlag anliegende zweite Rückstellfeder 86 sorgt dafür, dass der Antriebshebel 2 nach einer Schwenkbewegung wieder in die Nullpunktlage zurückgestellt wird.

Die erste Rückstellfeder 85 sorgt insbesondere für ein Voreilen des Formteils 7 bei der Rückstellung des Antriebshebels 2 nach Beendigung einer Schwenkbewegung des Antriebshebels 2, so dass die Spreiznocken 31, 32 in die der Nullpunktlage des Antriebshebels 2 entsprechende Ausgangsstellung zurückgestellt werden und damit die Aufweitung des Formteils 7 aufgehoben wird, die ansonsten durch die fortdauernde Anlage der Umfangsfläche 70 des Formteils 7 an der zylinderförmigen Antriebsfläche des Antriebsrades 1 zu einem Zurückdrehen des Antriebsrades 1 führen würde.

Die in Fig. 6 dargestellte Schnittansicht eines beidseitig wirkenden Antriebs unterscheidet sich von der Ausführungsform gemäß Fig. 5 dahingehend, dass der Verstärkungshebel 42 über die Antriebsachse 10 hinaus verlängert, an dem dem Spreiznocken 31 gegenüberliegenden Ende mittels eines Bolzens 92 an dem spielfrei auf der Antriebsachse 10 gelagerten Antriebshebel 2 angelenkt und mit einem Langloch 420 auf der Antriebsachse 10 abgestützt ist. Diese Ausführungsform ermöglicht es, den zweiten Spreiznocken 32 auf der dem ersten Spreiznocken 31 gegenüberliegenden Seite in Bezug auf die Antriebsachse 10 anzuordnen und stellt demzufolge einen großen Hebelarm für die Kippbewegung der Spreiznocken 31, 32 bereit.

Die weiteren Bauteile des in Fig. 6 dargestellten beidseitig wirkenden Antriebs entsprechen den Bauteilen und der Funktion dieser Bauteile des in Fig. 5 dargestellten Ausführungsbeispieles und tragen dementsprechend dieselben Bezugsziffem.

### Bezugszeichenliste

- 1: Antriebsrad
- 2: Antriebshebel
- 6: Federband
- 7: Formteil
- 10: Antriebsachse
- 20: Langloch
- 21: Bohrung
- 31,32: Spreiznocken
- 33, 34: Spreiznocken
- 35: Steg
- 36: Ausnehmung
- 41, 42: Verstärkungshebel
- 51, 52: Betätigungsscheiben
- 53, 54: Betätigungshebel
- 61, 62: abgewinkelte Federenden
- 70: Umfangsfläche
- 71: federelastischer Spreizhebel
- 72, 73: (keilförmige) Spreizflächen
- 74,75: Schenkel
- 76: Elastischer Steg
- 77: Aussparung
- 79: Ausnehmung
- 81, 82: Rückstellfedern
- 83: Druckfeder
- 84-86: Rückstellfedern
- 87: Feder
- 420: Langloch des Verstärkungshebels
- 510, 520: Bohrungen
- 511,521: Federbandaufnahmen
- 512, 522: Anlagen
- 513, 523: Anlagen
- 515, 525: Spreizflächen
- 530, 540: Bohrungen
- 531, 541: Federbandaufnahmen
- 533, 543: Keilflächen
- 534, 544: Keilflächen
- 781, 782: Federbandaufnahmen

## Patentansprüche

1. Beidseitig wirkender Antrieb zur Drehung eines mit einer Verstellvorrichtung verbundenen Antriebsrades (1) in die eine oder andere Antriebsrichtung mit einem um eine Antriebsachse (10) ausgehend von einer Nullpunktlage in die eine oder andere Richtung schwenkbaren Antriebshebel (2), der unmittelbar oder mittelbar über ein Kupplungselement (42) mit Spreiznocken (31 - 34) verbunden ist, die um eine von der Antriebsachse (10) beabstandete virtuelle Achse kippbar zwischen Spreizflächen (72, 73; 515, 525) von Betätigungshebeln (51 - 54, 71) angeordnet sind, die mit einem sich zumindest teilweise an der zylinderförmigen Antriebsfläche des Antriebsrades (1) abstützenden Federelement (6, 70) verbunden sind, wobei die Spreiznocken (31 - 34) die Betätigungshebel (51 - 54, 71) derart spreizen, dass das an der zylinderförmigen Antriebsfläche des Antriebsrades (1) anliegende Federelement (6, 70) aufgeweitet wird und das Antriebsrad (1) in Umfangsrichtung mitführt, wenn der Antriebshebel (2) von der Nullpunktlage weg bewegt wird, während bei einer Rückführung des Antriebshebels (2) in die Nullpunktlage die Anlage des Federelements (6, 70) an der zylinderförmigen Antriebsfläche des Antriebsrades (1) aufgehoben und das Antriebsrad (1) nicht mitgenommen wird.

2. Beidseitig wirkender Antrieb nach Anspruch 1, **dadurch gekennzeichnet, dass** die Spreiznocken (31 - 34) in unterschiedlichen radialen Abständen von der Antriebsachse (10) angeordnet sind.

3. Beidseitig wirkender Antrieb nach Anspruch 2, **dadurch gekennzeichnet, dass** mindestens ein Spreiznocken (31 - 34) vorgespannt und zwischen den Spreizflächen (72, 73; 515, 525) der Betätigungshebel (51 - 54, 71) radial verschiebbar angeordnet ist.

4. Beidseitig wirkender Antrieb nach Anspruch 3, **dadurch gekennzeichnet, dass** der vorgespannte und radial verschiebbare Spreiznocken (33) keilförmig ausgebildet, zwischen zwei gegenläufigen Keilflächen (72, 73; 533, 543) der Spreizflächen der Betätigungshebel (51 - 54, 71) angeordnet und selbsthemmend gegenüber dem anderen Spreiznocken (34) abgestützt ist.

5. Beidseitig wirkender Antrieb nach Anspruch 4, **dadurch gekennzeichnet, dass** der andere Spreiznocken (34) keilförmig mit entgegengerichteter Keilform ausgebildet und zwischen gegenläufige Keilflächen (534, 544) der Betätigungshebel (53; 54) eingespannt ist.

6. Beidseitig wirkender Antrieb nach Anspruch 5, **dadurch gekennzeichnet, dass** die Berührungsflächen der keilförmigen Spreiznocken (33, 34) und die Keilflächen (72, 73; 533, 543; 534, 544) der Betätigungshebel (53, 54, 71) einen geringeren Reibungskoeffizienten aufweisen als die gegenseitige Abstützung (35, 36) der keilförmigen Spreiznocken (33, 34).

7. Beidseitig wirkender Antrieb nach Anspruch 5 oder 6, **dadurch gekennzeichnet, dass** die gegenseitige Abstützung (35, 36) der keilförmigen Spreiznocken (33, 34) keilförmig mit einem gegenüber dem zwischen den Berührungsflächen der keilförmigen Spreiznocken (33, 34) und den Keilflächen (72, 73; 533, 543; 534, 544) der Betätigungshebel (53, 54, 71) eingeschlossenen Keilwinkel (α) kleineren Keilwinkel (α/2) ausgebildet ist.

8. Beidseitig wirkender Antrieb nach Anspruch mindestens einem der voranstehenden Ansprüche, **dadurch gekennzeichnet, dass** das Federelement aus einem Federband (6) besteht, dessen Enden (61, 62) parallel zueinander abgewinkelt und in Aufnahmen (511, 521; 531, 541; 781, 782) der Betätigungshebel (51 - 54, 71) eingesetzt sind.

9. Beidseitig wirkender Antrieb nach Anspruch 8, **dadurch gekennzeichnet, dass** das Federband (6) vorgespannt ist.

10. Beidseitig wirkender Antrieb nach Anspruch 8 oder 9, **dadurch gekennzeichnet, dass** die Betätigungshebel (51, 52) scheibenförmig ausgebildet sind und eine periphere Fläche aufweisen, die zumindest teilweise der zylinderförmigen Antriebsfläche des Antriebsrades (1) angepasst ist.

11. Beidseitig wirkender-Antrieb nach Anspruch 8 oder 9, **dadurch gekennzeichnet, dass** die Betätigungshebel aus einem einteiligen, federelastischen Spreizhebel (71) bestehen, der die Spreiznocken (31 - 34) und die Antriebsachse (10) einfaßt und auf der den Spreiznocken (31 - 34) in Bezug auf die Antriebsachse (10) gegenüberliegenden Seite einen Zugkräfte aufnehmenden elastischen Steg (76) aufweist.

12. Beidseitig wirkender Antrieb nach Anspruch 11, **gekennzeichnet durch** ein den Spreizhebel (71) und eine an die Antriebsfläche des Antriebsrades (1) angepasste Umfangsfläche (70) enthaltendes Formteil (7).

13. Beidseitig wirkender Antrieb nach Anspruch 12, **dadurch gekennzeichnet, dass** das Formteil (7) aus einem gestanzten Stahlteil, einem Kunststoffteil oder einem Sinterteil besteht und ohne Vorspannung in den Innenraum des Antriebsrades (1) einsetzbar ist.

14. Beidseitig wirkender Antrieb nach einen der voranstehenden Ansprüche 8 bis 11, **dadurch gekennzeichnet, dass** zwischen den Betätigungshebeln (51 - 54) oder dem Spreizhebel (71) Rückstellfedern (81, 82; 84, 85) so angeordnet sind, dass die Betätigungshebel (51 - 54) oder der Spreizhebel (71) die Spreiznocken (31 - 34) nach einer Schwenkbewegung des Antriebshebels (2) in eine der Nullpunktlage des Antriebshebels (2) entsprechende Ausgangslage zurückbewegen.

15. Beidseitig wirkender Antrieb nach mindestens einem der voranstehenden Ansprüche, **dadurch gekennzeichnet, dass** zwischen dem Antriebshebel (2) und einem ortsfesten Anschlag am Gehäuse des beidseitig wirkenden Antriebs eine Hebel-Rückstellfeder (86) angeordnet ist, die den Antriebshebel (2) nach einer Schwenkbewegung in die Nullpunktlage zurückbewegt.

16. Beidseitig wirkender Antrieb nach mindestens einem der voranstehenden Ansprüche Anspruch 1, **dadurch gekennzeichnet, dass** die Spreiznocken (31, 32) in unterschiedlichen radialen Abständen von der Antriebsachse (10) an einem schwenkbar am Antriebshebel (2) abgestützten Verstärkungshebel (41, 42) angeordnet sind.

17. Beidseitig wirkender Antrieb nach Anspruch 16, **dadurch gekennzeichnet, dass** die Anlenkung (91, 92) des Verstärkungshebels (41, 42) am Antriebshebel (2) radial fluchtend zu den Spreiznocken (31, 32) angeordnet ist.

18. Beidseitig wirkender Antrieb nach Anspruch 17, **dadurch gekennzeichnet, dass** die Anlenkung (91, 92) des Verstärkungshebels (41, 42) am Antriebshebel (2) auf der selben Seite in Bezug auf die Antriebsachse (10) wie die Spreiznocken (31, 32) vorgesehen ist.

19. Beidseitig wirkender Antrieb nach Anspruch 18, **dadurch gekennzeichnet, dass** die Anlenkung (91, 92) des Verstärkungshebels (41, 42) am Antriebshebel (2) auf der dem einen Spreiznocken (31) gegenüberliegenden Seite des Verstärkungshebels (42) in Bezug auf die Antriebsachse (10) angeordnet ist.

20. Beidseitig wirkender Antrieb nach mindestens einem der voranstehenden Ansprüche, **dadurch gekennzeichnet, dass** der Antriebshebel (2) mit einem Langloch (20) an der Antriebsachse (10) angelenkt ist.

21. Beidseitig wirkender Antrieb nach mindestens einem der voranstehenden Ansprüche 1 bis 19, **dadurch gekennzeichnet, dass** der Antriebshebel (2) über eine dem Durchmesser der Antriebsachse (10) angepasste Bohrung (21) an der Antriebsachse (10) angelenkt ist.

22. Beidseitig wirkender Antrieb nach mindestens einem der voranstehenden Ansprüche, **dadurch gekennzeichnet, dass** der Antriebshebel (2) auf der Antriebsachse (10) im wesentlichenwspielfreiwgelagert ist und dass der Verstärkungshebel (42) mit einem Langloch (420) auf der Antriebsachse (10) lagert.

## Claims

1. Bilateral drive for rotating a drive wheel (1) connected to an adjusting device into one or other drive direction with a drive lever (2) which is capable of swivelling about a drive axis starting from a neutral position in one or other direction, which lever is connected directly or indirectly with expansion cams (31-34) through a coupling element (42) which is pivotable about a virtual axis spaced from the drive axis (10) between expansion surfaces (72, 73; 515, 525) of actuation levers (51-54, 71), which are connected with a spring element (6,70) supported at least in part on the cylindrical drive surface of the drive wheel (1), wherein the expansion cams (31-34) expand the actuation levers (51-54, 71) so that the spring element (6,70) lying on the cylindrical drive surface of the drive wheel (1) is expanded and the drive wheel (1) is entrained in the circumferential direction when the drive lever (2) is moved away from the neutral position, while on a return movement of the drive lever to the neutral position the contact between the spring element (6,70) and the cylindrical drive surface of the drive wheel(1) is lifted and the drive wheel is not entrained.

2. Bilateral drive according to claim 1, **characterised in that** the expansion cams (31-34) are mounted at different radial distances from the drive axis (10).

3. Bilateral drive according to claim 2, **characterised in that** at least one expansion cam (31-34) is pretensioned and mounted radially displaceable between expansion faces (72, 73; 515, 525) of the actuation levers (51-54, 71).

4. Bilateral drive according to claim 3, **characterised in that** the pretensioned and radially displaceable expansion cam (33) is designed wedge-shaped, is mounted between two contra wedge faces (72,73; 533, 543) of the expansion faces of the actuation levers (51-54, 71) and is supported self-locking opposite the other expansion cam (34).

5. Bilateral drive according to claim 4, **characterised in that** the other expansion cam (34) is designed wedge-shaped with oppositely aligned wedge shape and is tensioned between contra wedge faces (534, 544) of the actuation levers (53, 54).

6. Bilateral drive according to claim 5, **characterised in that** the contact faces of the wedge-shaped expansion cams (33, 34) and the wedge faces (72;73; 533, 543; 534, 544) of the actuation levers (53, 54, 71) have a lower coefficient of friction than the reciprocal support (35, 36) of the wedge-shaped expansion cams (33,34).

7. Bilateral drive according to claim 5 or 6, **characterised in that** the reciprocal support (35, 36) of the wedge-shaped expansion cams (33, 34) is formed wedge-shaped with a smaller wedge angle (α/2) compared to the wedge angle (α) included between the contact faces of the wedge-shaped expansion cams (33, 34) and the wedge faces (72, 73; 533,543; 534, 544) of the actuation levers (53, 54, 71).

8. Bilateral drive according to at least one of the preceding claims, **characterised in that** the spring element consists of a spring strip (6) whose ends (61,62) are angled parallel to each other and are inserted into sockets (511, 521; 531, 541; 781, 782) of the actuation levers (51-54, 71).

9. Bilateral drive according to claim 8, **characterised in that** the spring strip (6) is pretensioned.

10. Bilateral drive according to claim 8 or 9, **characterised in that** the actuation levers (51, 52) are designed disc-shaped and have a peripheral surface which is adapted at least in part to the cylindrical drive face of the drive wheel (1).

11. Bilateral drive according to claim 8 or 9, **characterised in that** the actuation levers consist of a one-piece spring-elastic expansion lever (71) which includes the expansion cams (31-34) and drive axis (10) and has on the side opposite the expansion cams (31-34) in relation to the drive axis (10) an elastic web (76) which takes up the tensile forces.

12. Bilateral drive according to claim 11, **characterised by** a shaped part (7) containing the expansion lever (71) and a circumferential face (70) adapted to the drive face of the drive wheel (1).

13. Bilateral drive according to claim 12, **characterised in that** the shaped part (7) consists of a stamped steel part, a plastics part or a sintered part and can be inserted without pretension into the interior space of the drive wheel (1).

14. Bilateral drive according to one of the preceding claims 8 to 11, **characterised in that** between the actuation levers (51-54) or the expansion lever (71) are resetting springs (81, 82; 84, 85) arranged so that the actuation levers (51-54) or the expansion lever (71) move the expansion cams (31-34) after swivel movement of the drive lever (2) back into an initial position corresponding to the neutral position of the drive lever (2).

15. Bilateral drive according to at least one of the preceding claims, **characterised in that** between the drive lever (2) and a locally fixed stop on the housing of the bilateral drive is a lever-resetting spring (86) arranged to move the drive lever (2) after swivel movement back into the neutral position.

16. Bilateral drive according to at least one of the preceding claims claim 1, **characterised in that** the expansion cams (31, 32) are arranged at different radial distances from the drive axis (10) on a reinforcement lever (41, 42) supported for swivel movement on the drive lever (2).

17. Bilateral drive according to claim 16, **characterised in that** the attachment (91, 92) of the reinforcement lever (41, 42) on the drive lever (2) is arranged radially aligned with the expansion cams (31, 32).

18. Bilateral drive according to claim 17, **characterised in that** the attachment (91, 92) of the reinforcement lever (41, 42) to the drive lever (2) is provided on the same side in relation to the drive axis (10) as the expansion cams (31,32).

19. Bilateral drive according to claim 18, **characterised in that** the attachment (91, 92) of the reinforcement lever (41, 42) on the drive lever (2) is mounted on the side of the reinforcement lever (42) opposite the one expansion cam (31) in relation to the drive axis (10).

20. Bilateral drive according to at least one of the preceding claims, **characterised in that** the drive lever (2) is attached to the drive axis (10) by an oblong hole (20).

21. Bilateral drive according to at least one of the preceding claims 1 to 19, **characterised in that** the drive lever (2) is attached to the drive axis (10) through a bore (21) adapted to the diameter of the drive axis (10).

22. Bilateral drive according to at least one of the preceding claims, **characterised in that** the drive lever (2) is mounted substantially without play on the drive axis (10) and that the reinforcement lever (42) is mounted on the drive axis (10) through an oblong hole (420).

## Revendications

1. Entraînement à action bilatérale pour tourner une roue d'entraînement (1) reliée à un dispositif de réglage dans l'une ou l'autre direction d'entraînement avec un levier d'entraînement (2) basculable sur un axe d'entraînement (10) en partant d'une position de point zéro dans l'une ou l'autre direction, lequel est relié directement ou indirectement par un élément de couplage (42) à des ergots d'écartement (31 - 34), qui sont placés de manière basculable sur un axe virtuel écarté de l'axe d'entraînement (10) entre des surfaces d'écartement (72, 73 ; 515, 525) de leviers d'actionnement (51 - 54, 71), qui sont reliés à un élément de ressort (6, 70) s'appuyant au moins partiellement sur la surface d'entraînement cylindrique de la roue d'entraînement (1), dans lequel les ergots d'écartement (31 - 34) écartent les leviers d'actionnement (51 - 54, 71) de manière à ce que l'élément de ressort (6, 70) reposant sur la surface d'entraînement cylindrique de la roue d'entraînement (1), soit déployé et entraîne la roue d'entraînement (1) dans le sens périphérique, lorsque le levier d'entraînement (2) est éloigné de la position de point zéro, alors que pendant un guidage de retour du levier d'entraînement (2) à la position de point zéro, le placement de l'élément de ressort (6, 70) sur la surface d'entraînement cylindrique de la roue d'entraînement (1) est interrompu et la roue d'entraînement (1) n'est pas entraînée.

2. Entraînement à action bilatérale selon la revendication 1, **caractérisé en ce que** les ergots d'écartement (31 - 34) sont positionnés à différentes distances radiales de l'axe d'entraînement (10).

3. Entraînement à action bilatérale selon la revendication 2, **caractérisé en ce qu'**au moins un ergot d'écartement (31 - 34) est précontraint et positionné de manière déplaçable radialement entre les surfaces d'écartement (72, 73 ; 515, 525) des leviers d'actionnement (51 - 54, 71).

4. Entraînement à action bilatérale selon la revendication 3, **caractérisé en ce que** l'ergot d'écartement (33) précontraint et déplaçable radialement forme un taquet, est placé entre deux surfaces de taquets opposées (72, 73 ; 533, 543) des surfaces d'écartement des leviers d'actionnement (51 - 54, 71) et est appuyé de manière autobloquante contre l'autre ergot d'écartement (34).

5. Entraînement à action bilatérale selon la revendication 4, **caractérisé en ce que** l'autre ergot d'écartement (34) forme un taquet avec une forme de taquet lui faisant face et est précontraint entre des surfaces de taquets opposées (534, 544) des leviers d'actionnement (53 ; 54).

6. Entraînement à action bilatérale selon la revendication 5, **caractérisé en ce que** les surfaces de contact des ergots d'écartement en forme de taquet (33, 34) et les surfaces de taquets (72, 73 ; 533, 543 ; 534, 544) des leviers d'actionnement (53, 54, 71) présentent un coefficient de frottement plus faible que le support réciproque (35, 36) des ergots d'écartement en forme de taquet (33, 34).

7. Entraînement à action bilatérale selon la revendication 5 ou 6, **caractérisé en ce que** le support réciproque (35, 36) des ergots d'écartement en forme de taquet (33, 34) est en forme de taquet avec un angle de taquet (α/2) inférieur par rapport à l'angle de taquet (α) intégré entre les surfaces de contact des ergots d'écartement en forme de taquet (33, 34) et les surfaces de taquets (72, 73 ; 533, 543 ; 534, 544) des leviers d'actionnement (53, 54, 71).

8. Entraînement à action bilatérale selon au moins l'une quelconque des revendications précédentes, **caractérisé en ce que** l'élément de ressort est composé d'une lame de ressort (6) dont les extrémités (61, 62) sont coudées parallèlement entre elles et sont insérées dans des réceptions (511, 521 ; 531, 541 ; 781, 782) des leviers d'actionnement (51 - 54, 71).

9. Entraînement à action bilatérale selon la revendication 8**, caractérisé en ce que** la lame de ressort (6) est précontrainte.

10. Entraînement à action bilatérale selon la revendication 8 ou 9 **caractérisé en ce que** les leviers d'actionnement (51, 52) sont en forme de disque et présentent une surface périphérique qui est adaptée au moins partiellement à la surface d'entraînement cylindrique de la roue d'entraînement (1).

11. Entraînement à action bilatérale selon la revendication 8 ou 9, **caractérisé en ce que** les leviers d'actionnement sont composés d'un levier d'écartement élastique monobloc (71) qui englobe les ergots d'écartement (31 - 34) et l'axe d'entraînement (10) et présente sur le côté opposé aux ergots d'écartement (31 - 34) par rapport à l'axe d'entraînement (10) une traverse élastique (76) recevant des forces de traction.

12. Entraînement à action bilatérale selon la revendication 11, **caractérisé par** une pièce moulée (7) comportant le levier d'écartement (71) et une surface périphérique (70) adaptée à la surface d'entraînement de la roue d'entraînement (1).

13. Entraînement à action bilatérale selon la revendication 12, **caractérisé en ce que** la pièce moulée (7) est composée d'une pièce d'acier estampée, d'une pièce de plastique ou d'une pièce de frittage et peut être insérée sans précontrainte dans l'espace intérieur de la roue d'entraînement (1).

14. Entraînement à action bilatérale selon l'une quelconque des revendications 8 à 11, **caractérisé en ce qu'**entre les leviers d'actionnement (51 - 54) ou le levier d'écartement (71), des ressorts de rappel (81, 82 ; 84, 85) sont placés de manière à ce que les leviers d'actionnement (51 - 54) ou le levier d'écartement (71) ramènent les ergots d'écartement (31 - 34) à une position de départ correspondant à la position de point zéro du levier d'entraînement (2) après un mouvement de bascule du levier d'entraînement (2).

15. Entraînement à action bilatérale selon au moins l'une des revendications précédentes, **caractérisé en ce qu'**entre le levier d'entraînement (2) et une butée fixe sur le boîtier de l'entraînement à action bilatérale, un ressort de rappel de levier (86) est placé qui ramène le levier d'entraînement (2) à la position de point zéro après un mouvement de bascule.

16. Entraînement à action bilatérale selon au moins l'une quelconque des revendications précédentes, **caractérisé en ce que** les ergots d'écartement (31, 32) sont placés à des distances radiales différents de l'axe d'entraînement (10) sur un levier de renforcement (41, 42) appuyé de manière basculable sur le levier d'entraînement (2).

17. Entraînement à action bilatérale selon la revendication 16, **caractérisé en ce que** l'articulation (91, 92) du levier de renforcement (41, 42) est placée sur le levier d'entraînement (2) de manière radialement fuyante vers les ergots d'écartement (31, 32).

18. Entraînement à action bilatérale selon la revendication 17, **caractérisé en ce que** l'articulation (91, 92) du levier de renforcement (41, 42) sur le levier d'entraînement (2) est prévue sur le même côté par rapport à l'axe d'entraînement (10) que les ergots d'écartement (31, 32).

19. Entraînement à action bilatérale selon la revendication 18, **caractérisé en ce que** l'articulation (91, 92) du levier de renforcement (41, 42) sur le levier d'entraînement (2) est placée sur le côté du levier de renforcement (42) opposé à l'un des ergots d'écartement (31) par rapport à l'axe d'entraînement (10).

20. Entraînement à action bilatérale selon au moins l'une quelconque des revendications précédentes, **caractérisé en ce que** le levier d'entraînement (2) est articulé avec un trou longitudinal (20) sur l'axe d'entraînement (10).

21. Entraînement à action bilatérale selon au moins l'une quelconque des revendications précédentes 1 à 19, **caractérisé en ce que** le levier d'entraînement (2) est articulé sur l'axe d'entraînement (10) par un perçage (21) adapté au diamètre de l'axe d'entraînement (10).

22. Entraînement à action bilatérale selon au moins l'une quelconque des revendications précédentes, **caractérisé en ce que** le levier d'entraînement (2) est positionné sur l'axe d'entraînement (10) essentiellement sans jeu et que le levier de renforcement (42) repose sur l'axe d'entraînement (10) avec un trou longitudinal (420).
